# EUROPÄISCHE PATENTSCHRIFT

(11) **EP 0 974 506 B1**
(45) Veröffentlichungstag und Bekanntmachung des Hinweises auf die Patenterteilung: **26.07.2006**
(21) Anmeldenummer: 99111387.9
(22) Anmeldetag: 11.06.1999
(51) Int. Cl.: B60T 13/74, F16D 65/34, B60T 7/10

(54) **Vorrichtung zur Bremsenbetätigung**
Brake actuation device
Dispositif d'actionnement de frein

(30) Priorität: 24.07.1998 DE 19833304
(43) Veröffentlichungstag der Anmeldung: 26.01.2000
(73) Patentinhaber: DaimlerChrysler AG, 70567 Stuttgart (DE)
(72) Erfinder: Fleischer, Horst, 74348 Lauffen (DE); Titz, Walter, 71549 Auenwald (DE)

(56) Entgegenhaltungen:
- US-A- 4 546 298
- US-A- 4 644 180
- US-A- 5 180 038

## Beschreibung

Die Erfindung betrifft eine Vorrichtung zur Betätigung einer Bremse von Fahrzeugen mit den Merkmalen des Oberbegriffs des Anspruches 1.

Vorrichtungen, welche zur Betätigung einer Bremse einen Elektromotor, ein Getriebe sowie einen Federspeicher enthalten, sind aus DE 25 46 470 A1, DE 27 10 585 C2 und DE 44 03 719 C1 bekannt. In einer die Bremse nicht betätigenden Lösestellung der Vorrichtung nimmt die Speicherfeder des Federspeichers eine Federenergie speichernde Lage ein. Zur Aufrechterhaltung dieser Lösestellung ist eine Sperreinrichtung in Form einer elektrisch betätigbaren Blockierung für die Motorantriebswelle bzw. das Getriebe vorgesehen oder dem Elektromotor wird zu seiner Blokkierung eine niedrige Haltespannung zugeführt (DE 25 46 470 Al). Nachteilig bei diesen vorbekannten Vorrichtungen ist es, daß sich der Federspeicher bei Stromausfall automatisch entspannt und die Vorrichtung folglich in eine die Bremse betätigende Bremsstellung überführt wird. Dieser automatische Bremsvorgang kann zu erheblichen Störungen und Sicherheitsrisiken beim Betrieb des Fahrzeugs führen.

Bei einer weiteren, in DE 30 48 766 A1 offenbarten Vorrichtung zur elektrischen Bremsenbetätigung wird auf einen Federspeicher zum Erreichen der Bremsstellung verzichtet. Die Bremsstellung wird durch eine entsprechende Belastung des Elektromotors erzielt. Bei Stromausfall muß dann ein Wellenstummel der Motorantriebswelle manuell mittels eines Werkzeugs gedreht werden, wenn gebremst werden soll. Dies wird vom Fahrer als unkomfortabel empfunden. Wird diese Vorrichtung in einer Feststellbremse eingesetzt, muß bei Stromausfall ein geparktes Fahrzeug zunächst vom Fahrer verlassen werden, wenn er das Fahrzeug mittels der Feststellbremse feststellen will. Diese Notwendigkeit ist insbesondere auf geneigten Fahrbahnoberflächen entweder gar nicht möglich oder mit erheblichen Sicherheitsrisiken (Gefahr des Wegrollens des Fahrzeugs) sowohl für den Fahrer und ggfs. weitere Personen als auch für das Fahrzeug verbunden.

Eine gattungsgemäße Vorrichtung ist aus US-A- 5 180 038 bekannt.

Der Erfindung liegt die Aufgabe zugrunde, die Arbeitsweise einer elektrischen Bremse besser an die funktionalen Erfordernisse anzupassen.

Diese Aufgabe wird durch die Merkmalskombination des Anspruches 1 gelöst.

Vorteilhafte und zweckmäßige Ausgestaltungen der Erfindung sind in den Unteransprüchen angegeben.

Erfindungsgemäß ist die Sperreinrichtung in ihrer die Bewegungssperre bewirkenden Sperrstellung mechanisch gehalten und zur Aufhebung der Bewegungssperre in Lösestellung des Kopplungsgliedes elektrisch und wahlweise mechanisch betätigbar. Mit anderen Worten ist das Kopplungsglied in Lösestellung durch entsprechende Sperrmittel der Sperreinrichtung mechanisch blokkiert. Die Sperreinrichtung wirkt also stromlos, d.h. unabhängig von elektrischer Energieversorgung. Deshalb bleibt die Sperreinrichtung auch nach Stromausfall oder bei einem Defekt einer an die Vorrichtung angeschlossenen Steuerelektronik wirksam. Unerwünschte Bremsvorgänge beim Fahrbetrieb infolge Stromausfall bzw. elektrischem Defekt werden somit zuverlässig vermieden. Wegen der zusätzlichen (und bei vorhandenem Strom wahlweisen) mechanischen Betätigungsmöglichkeit der Sperreinrichtung ist ein automatischer, durch Stromausfall hervorgerufener Bremsvorgang auch nicht erforderlich. Bei Stromausfall sind nur gewollte Bremsvorgänge möglich, indem die Bewegungssperre durch mechanische Betätigung (z.B. manuell) der Sperreinrichtung bzw. ihrer mechanischen Sperrmittel aufgehoben wird. Danach erfolgt der Bremsvorgang automatisch mittels der freiwerdenden Federenergie des Federspeichers. Zusammengefaßt ist ein Bremsvorgang bei vorhandener Stromversorgung für die Bremse elektrisch und wahlweise mechanisch auslösbar, während nach Stromausfall eine mechanische (Not-)Auslösung des Bremsvorgangs durch den Fahrzeugführer möglich ist.

Ist die elektrische Energieversorgung für die Sperreinrichtung wieder vorhanden, kann die mechanische Betätigung der Sperreinrichtung durch eine elektrische Betätigung ersetzt werden, bei der ein elektrisches Signal bzw. elektrische Energie in eine die Sperreinrichtung beaufschlagende Kraft umgewandelt wird, um ihre mechanischen Sperrmittel aus der Sperrstellung zu entfernen. Vorzugsweise ist zur elektrischen Betätigung in der Fahrgastzelle oder der Fahrerkabine des Fahrzeugs eine elektrische Schalteinrichtung vorgesehen, welche über elektrische Leitungen (Versorgungsleitungen, Steuerleitungen), Schalter (z.B. Relais, Überlastschalter etc.) und ggfs. weitere Bauteile mit den mechanischen Sperrmitteln gekoppelt ist.

Auch wenn bei vorhandenem Strom die Sperreinrichtung in Lösestellung des Kopplungsgliedes mechanisch betätigt werden kann, wird der Fahrer wegen des größeren Bedienungskomforts normalerweise die elektrische Betätigung der Sperreinrichtung auswählen. Die mechanische Betätigung bzw. Auslösung des Bremsvorganges ist dann vor allem für den Notfall (z.B. Stromausfall) gedacht.

Vorzugsweise wird die Bewegungssperre bei Stromausfall vom Fahrersitz aus manuell aufgehoben, was für den Fahrer besonders komfortabel ist. Im Sinne einer hohen Sicherheit muß der Fahrer das Fahrzeug auch nicht verlassen, wenn er bei Stromausfall die mechanische Sperrwirkung der Sperreinrichtung aufheben will. Hierdurch ist z.B. das Feststellen eines Fahrzeugs, insbesondere auf geneigten Fahrbahnen, mittels der in einer Feststellbremse eingesetzten erfindungsgemäßen Vorrichtung besonders einfach und sicher.

Um das Kopplungsglied bei Stromausfall aus der Bremsstellung in die Lösestellung zu überführen, muß eine geeignete, manuell betätigbare Löseeinrichtung oder ein Werkzeug vorhanden sein, um das Kopplungsglied entsprechend zu beaufschlagen. Ein nach Stromausfall mechanisch ausgelöster Bremsvorgang ist deshalb einmalig und die Bremsstellung bleibt aufgrund des entspannten Federspeichers erhalten, wenn die vorgenannte Löseeinrichtung bzw. das Werkzeug nicht verfügbar ist. Somit kann das Fahrzeug bei Stromausfall, was oftmals einen Notfall bedeutet, zuverlässig geparkt und festgestellt werden.

Der Elektromotor ist beispielsweise als Linearmotor oder Motor mit einer Motorantriebswelle ausgebildet. Denkbar sind auch elektrisch betriebene Ultraschall- oder Wanderwellenmotoren. In jedem Fall ist der Elektromotor durch geeignete Mittel mit dem Kopplungsglied bewegungsmäßig derart gekoppelt, daß das Kopplungsglied linearbeweglich antreibbar ist.

Die Sperreinrichtung weist ein bewegliches Sperrelement als mechanisches Sperrmittel auf, welches mittels eines äußeren Kraftangriffs die Bewegungssperre aufhebt. Derartige Konstruktionen sind fertigungstechnisch einfach und robust realisierbar, so daß auch definierte Funktionsstellungen der Sperreinrichtung gewährleistet sind. Beispielsweise ist das Sperrelement als linearbeweglicher Sperrschieber ausgebildet.

Die die Sperrstellung sichernde Kraft kann teilweise oder vollständig eine am Sperrelement durch geeignete Mittel (z.B. die Rückstellmittel) angreifende äußere Kraft sein. Auch die Eigengewichtskraft des Sperrelements kann die Sperrstellung sichern.

Anspruch 1 unterstützt eine einfache Konstruktion und günstige Kraftübertragung bei der Blockierung der Motorantriebswelle. Hierbei kann das Sperrelement die Motorantriebswelle unmittelbar oder mittelbar blockieren.

Außerdem schafft Anspruch 1 einen stabilen Aufbau der Sperreinrichtung mit Hilfe eines Sperrwerkes bzw. eines Gesperres. Vorzugsweise ist das Gesperre als Zahn- oder Klinkengesperre ausgestaltet. Die Blockierung der Motorantriebswelle kann in eine oder in beide Drehrichtungen wirksam sein. Das Gesperre ist hierzu bedarfsweise entsprechend ausgebildet. Vorzugsweise ist für eine betriebssichere Arbeitsweise der Vorrichtung zumindest diejenige Drehrichtung der Motorantriebswelle blockiert, bei der das Kopplungsglied in Richtung der Bremsstellung überführt werden würde. Auf diese Weise sind ungewollte Bremsvorgänge bei Stromausfall besonders sicher vermieden.

Anspruch 2 schlägt eine reversible Aufhebung der Bewegungssperre vor, d.h. die Bewegungssperre ist wiederherstellbar. Hierdurch kann eine erneute Bewegungssperre des Kopplungsgliedes erzielt werden, wenn der Bremsvorgang abgeschlossen ist. Vorzugsweise gelangt die Sperreinrichtung automatisch erneut in ihre das Kopplungsglied blockierende Sperrstellung, wenn die elektrische oder mechanische Betätigung der Sperreinrichtung beendet ist. Dies geschieht vorteilhaft mittels eines die Sperreinrichtung beaufschlagenden mechanischen Rückstellmittels, beispielsweise eines Federelementes.

Durch Anspruch 3 ist das Sperrelement besonders raumsparend angeordnet.

Durch Anspruch 4 ist ein mechanisch stabiles Zusammenwirken von Sperrelement und Motorantriebswelle gewährleistet. Dies wiederum unterstützt einen verschleißarmen und langlebigen Betrieb der Vorrichtung.

Die Ansprüche 5 und 6 betreffen vorteilhafte Maßnahmen, um die Vorrichtung bei vorhandenem Strom elektrisch zu betätigen bzw. zu steuern. Dabei wird ein mit dem Sperrelement mechanisch gekoppelter Elektromagnet (z.B. ein Hubmagnet) elektrisch aktiviert, so daß das Sperrelement seine Sperrstellung zwangsweise verläßt und der Elektromotor das Kopplungsglied verstellen kann. Vorzugsweise werden der Elektromagnet und der Elektromotor durch Betätigung einer Schalteinrichtung (z.B. manuelle Betätigung einer Schaltwippe oder eines Drehknopfes) mit elektrischer Energie versorgt. Hierbei können der Elektromagnet und der Elektromotor durch die Änderung eines einzigen Schaltzustandes etwa gleichzeitig aktiviert werden. Besonders komfortabel ist diese elektrische Bremse oder Feststellbremse mittels einer im Armaturenbereich des Fahrzeugs angeordneten Schalteinrichtung bedienbar. Durch erneute Bedienung der schalteinrichtung (= Beenden der elektrischen Energieversorgung) bestimmt der Fahrer selbst die neue Stellung der elektrischen Bremse.

Anspruch 6 schafft eine raumsparende Anordnung von Elektromagnet und Sperrelement sowie eine günstige Kraftübertragung zwischen diesen Bauteilen.

Um auch bei Stromausfall einen Bremsvorgang auslösen zu können, schlägt Anspruch 7 ein mit der Sperreinrichtung gekoppeltes Übertragungsmittel vor, welches eine komfortable manuelle Betätigung der Sperreinrichtung von einem gegenüber der Position der Sperreinrichtung entfernten Ort (z.B. Fahrersitz im Fahrzeug) ermöglicht. Je nach Anwendungsfall ist das Übertragungsmittel durch geeignete Bauteile realisiert. Beispielsweise handelt es sich um ein Gestänge und/oder ein Zugseil.

Anspruch 8 ermöglicht einen konstruktionstechnisch unaufwendigen Aufbau der Vorrichtung, um die Sperreinrichtung in Lösestellung des Kopplungsgliedes sowohl elektrisch als auch mechanisch zu betätigen.

Eine mechanische Betätigung der Sperreinrichtung wird gemäß Anspruch 9 weiter vereinfacht, indem die Sperreinrichtung über das Übertragungsmittel mit einem geeigneten Betätigungsorgan gekoppelt ist. Insbesondere wird das Betätigungsorgan per Muskelkraft des Fahrers betätigt. Das vorzugsweise im Bereich des Fahrersitzes angeordnete Betätigungsorgan ist hierbei z.B. als Handgriff, Handbremshebel oder Fußpedal ausgebildet.

Die Ansprüche 10 und 11 betreffen vorteilhafte Maßnahmen, um mittels einer Motorantriebswelle das Kopplungsglied mechanisch stabil anzutreiben. Zur Gewichtsminimierung der Vorrichtung können die Zahnräder des Umsetzungsgetriebes aus Kunststoff hergestellt sein und/oder Ausnehmungen aufweisen, welche eine abschnittsweise geringere Wandstärke der Zahnräder verursachen. Der Spindelantrieb kann je nach gegebenen räumlichen Verhältnissen und erforderlicher Kraftumsetzung mit einem Zahnradgetriebe oder einem anderen Getriebe zusammenwirken.

Gemäß Anspruch 12 ist die Vorrichtung baukastenartig aufgebaut, wodurch Wartungs- und Reparaturarbeiten besonders montagefreundlich durchgeführt werden können. Außerdem ist es möglich, daß nur die defekten Bauteile selbst ausgetauscht und die übrigen Bauteile im Sinne einer kostengünstigen Reparatur weiterverwendet werden.

Um die Montage der einzelnen Gehäuseteile der Vorrichtung zu vereinfachen; schlägt Anspruch 13 Anlagemittel vor, welche an den Gehäuseteilen angeordnet sind und miteinander korrespondieren. Die Anlagemittel wirken als Fixierhilfe und gewährleisten eine paßgenaue Montage der Vorrichtung auch durch ungeübte Personen.

Anspruch 14 schlägt eine mechanisch stabile Ausführung des Anlagemittels vor. Dies unterstützt den beschädigungsfreien Zusammenbau der Vorrichtung und deren stabilen Zusammenhalt nach der Montage.

Die Anlagemittel können separat hergestellt und danach z.B. durch Verschweißen, Löten etc. mit dem jeweiligen Gehäuseteil fest verbunden werden. Alternativ sind die Anlagemittel von vornherein einstückiger Bestandteil des Gehäuseteiles während dessen Herstellung.

Eine topfartige Ausgestaltung zumindest des einen Gehäuseteiles gemäß Anspruch 15 begünstigt den Einbau der Vorrichtung in Raumverhältnisse, wie sie für herkömmliche Vorrichtungen - z.B. Membranzylinder, Federspeicherzylinder, Kombibremszylinder etc. - ohnehin bei Fahrzeugen berücksichtigt sind. Ein nachträglicher Einsatz der Vorrichtung in eine bereits vorhandene Bremsanlage ist somit vereinfacht.

Anspruch 16 schlägt einen Aufbau der Vorrichtung mit teilweise vorkonfektionierten, auf dem Markt kostengünstig erhältlichen Bauteilen vor. Teile eines herkömmlichen pneumatischen Bremszylinders - insbesondere Teilgehäuse des Zylinders, Federspeicher, Kolbenstange - werden hierbei kostensparend für die erfindungsgemäße Vorrichtung verwendet. Bremszylinder mit einem mehrteiligen Gehäuse sind beispielsweise aus DE 28 28 385 A1, DE 33 44 622 A1 und DE 36 03 145 A1 bekannt. Bei einem derartigen Bremszylinder wird zunächst der den pneumatischen Anschlußstutzen tragende Zylinderdeckel und ggfs. die Membran entfernt. Danach wird das erste Gehäuseteil, welches die Sperreinrichtung und vorteilhaft auch den Elektromotor und ggfs. das Umsetzungsgetriebe fixiert, einfach nach Art des Zylinderdeckels am verbleibenden Gehäuseteil des Bremszylinders angelegt und lösbar fixiert. Konstruktive Anpassungen zur kraftmäßigen Kopplung zwischen der als Kopplungsglied wirksamen Kolbenstange und dem Elektromotor sind dabei kaum oder überhaupt nicht erforderlich. Die Kolbenstange wird z.B. von einem Linearmotor in Richtung der Lösestellung angeschoben. Bei Einsatz einer Motorantriebswelle wird eine drehfeste Verbindung zwischen Spindelantrieb und Kolbenstange z.B. bereits dadurch erzielt, daß die drehfest angetriebene Spindel oder Spindelmutter mit einer Stirnfläche etwa bündig an den Kolben oder das Axialende der Kolbenstange angelegt wird.

Die Maßnahme nach Anspruch 16 hat außerdem den Vorteil, daß die Vorrichtung montagefreundlich und kostengünstig jederzeit von pneumatischen Antrieb auf elektrischen Antrieb und umgekehrt umgerüstet werden kann, da einzelne Teile der Vorrichtung nach dem Baukastenprinzip austauschbar sind. Mit anderen Worten kann auch nachträglich mit verhältnismäßig geringem Aufwand eine pneumatische Bremse in eine elektrische Bremse und umgekehrt "umgewandelt" werden. So existieren z.B. Fahrzeuge, bei denen außer einer pneumatischen Feststellbremse keinerlei pneumatische Funktionen vorhanden sind. In diesem Fall ist die Feststellbremse wegen des notwendigen Kompressors, Druckreglers, Lufttrockners, Luftbehälters etc. besonders teuer. Erheblich kostengünstiger ist hier eine elektrische Betätigung der Feststellbremse, welche deshalb wie oben beschrieben umgerüstet wird. Sollte im Fahrzeug eine elektrische Feststellbremse installiert sein und weitere Funktionen mit pneumatischem Antrieb betätigt werden, so kann es kostengünstiger sein, auch die Feststellbremse pneumatisch zu betätigen. Die Feststellbremse wird dann einfach in oben beschriebener Weise auf pneumatischen Antrieb umgerüstet, indem das den Elektromotor fixierende Gehäuseteil entfernt und durch einen Zylinderdeckel mit pneumatischem Anschlußstutzen ersetzt wird.

Gemäß Anspruch 17 ist die Vorrichtung vorteilhaft Bestandteil einer elektrischen Feststellbremse für ein Fahrzeug, wobei vorzugsweise zwei Vorrichtungen für jeweils eine Radbremse an der Hinterachse eines zweiachsigen Fahrzeugs vorgesehen sind.

Der Erfindungsgegenstand wird anhand der in den Figuren dargestellten Ausführungsbeispiele näher erläutert. Es zeigen:
- Fig. 1: eine im Schnitt gemäß Schnittlinie I-I in Fig.3 dargestellte Seitenansicht der Vorrichtung in Bremsstellung,
- Fig. 2: die Vorrichtung gemäß Fig.1 in Lösestellung,
- Fig. 3: eine teilweise geschnittene Draufsicht auf die vorrichtung,
- Fig. 4: eine vergrößerte Detaildarstellung der Vorrichtung gemäß Fig.3,
- Fig. 5: eine vergrößerte Darstellung der Vorrichtung gemäß Fig.1 und Fig.2, jedoch ohne Federspeicher,
- Fig. 6: eine Schnittdarstellung eines Details der Vorrichtung gemäß Schnittlinie VI-VI in Fig.4,
- Fig. 7: eine Schnittdarstellung eines Details gemäß Schnittlinie VII-VII in Fig.2 und
- Fig. 8: eine Schnittdarstellung eines Details der Vorrichtung gemäß Schnittlinie VIII-VIII in Fig.1.

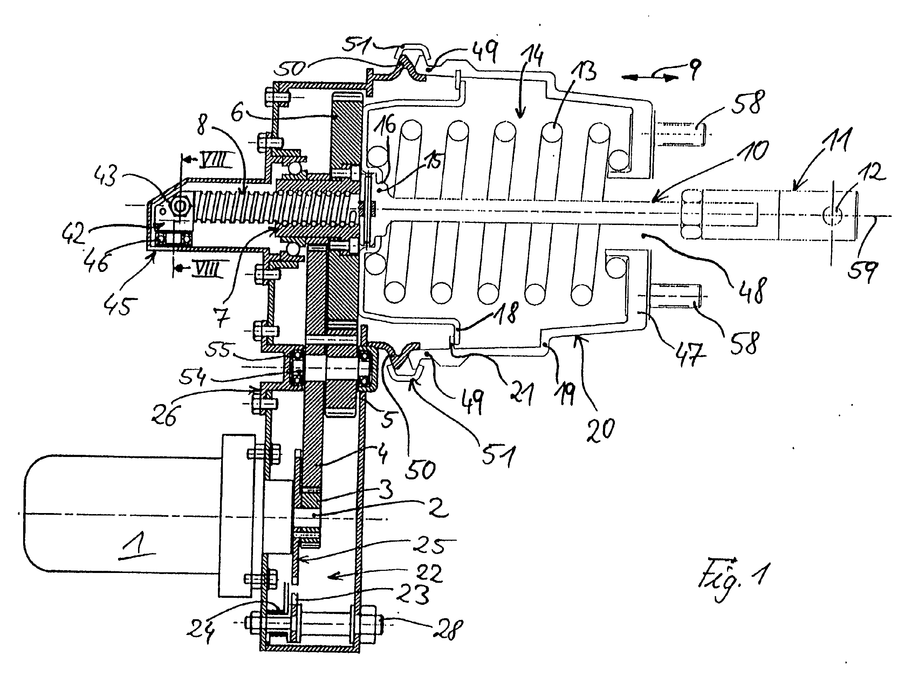

In Fig.1 befindet sich die Vorrichtung in ihrer eine Radbremse betätigenden Bremsstellung. Die Vorrichtung weist einen Elektromotor 1 mit einer Motorantriebswelle 2 auf. Die Motorantriebswelle 2 ist mit einem ersten Zahnrad 3 eines Untersetzungsgetriebes drehfest verbunden. Das Untersetzungsgetriebe enthält insgesamt vier Zahnräder, wobei ein zweites Zahnrad 4 mit einem dritten Zahnrad 5 drehfest verbunden ist und das vierte Zahnrad 6 mit der Spindelmutter 7 eines Spindelantriebs drehfest verbunden ist. Eine mit der Spindelmutter 7 korrespondierende Spindel 8 ist in Bewegungsrichtung 9 eines in Form einer Kolbenstange ausgebildeten Kopplungsgliedes 10 linearbeweglich. Das Kopplungsglied 10 trägt an seinem der Spindel 8 axial gegenüberliegenden Freiende einen Gabelkopf 11 mit zwei quer zur Zeichenblattebene miteinander fluchtenden Lageraugen 12 zur Anlenkung eines hier nicht dargestellten Bremsspannmechanismus.

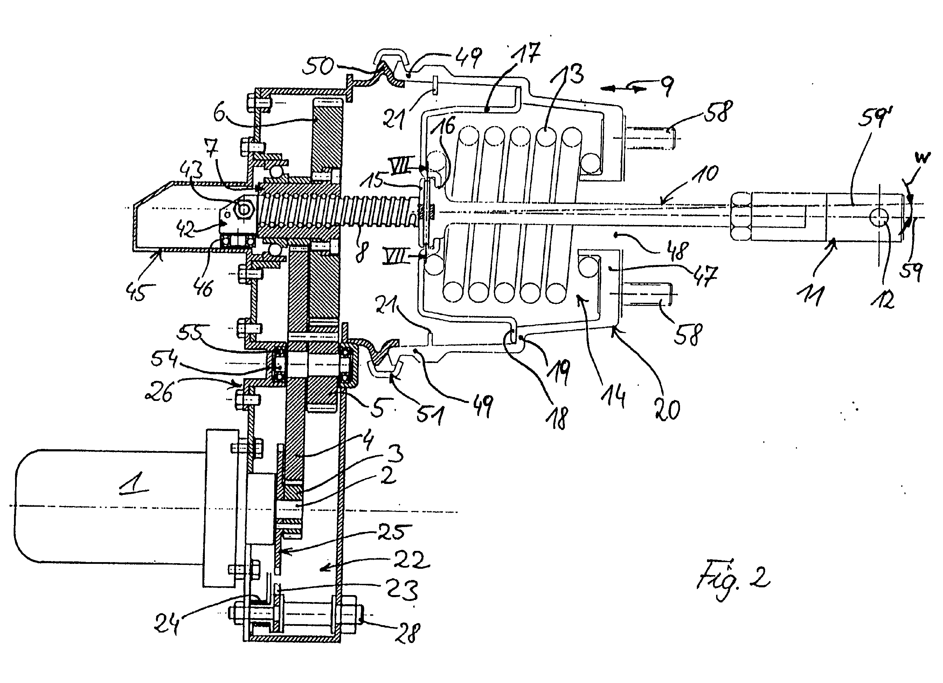

Mittels eines nicht dargestellten elektrischen Schalters wird eine später noch zu beschreibende Bewegungssperre an der Motorantriebswelle 12 aufgehoben und der Elektromotor 1 erregt, so daß das Kopplungsglied 10 aus seiner die Bremse (mittels des Bremsspannmechanismus) betätigenden Bremsstellung gemäß Fig.1 in seine Lösestellung gemäß Fig.2 überführt wird. Dabei muß die Antriebskraft des Elektromotors 1 die Federkraft der Druckfeder 13 eines Federspeichers 14 überwinden. Das Kopplungsglied 10 ist mit der Druckfeder 13 bewegungsmäßig gekoppelt, indem sich ein Stangenkopf 15 des Kopplungsgliedes 10 am Öffnungsrand einer zentralen Kolbenöffnung 16 eines topfartigen Kolbens 17 abstützt. Gleichzeitig stützt sich das eine axiale Federende der Druckfeder 13 an dem Kolben 17 ab. In Lösestellung des Kopplungsgliedes 10 nimmt der Federspeicher 14 deshalb eine Federenergie speichernde Speicherlage ein. Hierbei stützt sich der Kolben 17 mit einem Kolbenrand 18 an einem absatzartigen Begrenzungsanschlag 19 ab, welcher Bestandteile eines mit einem ersten Gehäuseteil 26 zusammenwirkenden zweiten Gehäuseteils 20 ist. Eine weitere Kompression der Druckfeder 13 wird durch den Begrenzungsanschlag verhindert. In dieser Speicherlage wird die Druckfeder 13 durch die Bewegungssperre gehalten.

Die Bewegungssperre in Lösestellung des Kopplungsgliedes 10 kann bei vorhandener Stromversorgung durch den elektrischen Schalter und alternativ manuell, d.h. mechanisch aufgehoben werden. Bei Stromausfall kann die Bewegungssperre nur noch manuell aufgehoben werden. Die Druckfeder 13 kann sich dann entspannen und überführt das Kopplungsglied 10 automatisch in seine Bremsstellung gemäß Fig.1. Dieser Bremsvorgang kann bei vorhandenem Strom auch durch Erregen des Elektromotors 1 mit einem entsprechenden Antrieb der Motorantriebswelle 2 unterstützt werden. Eine weitere Entspannung der Druckfeder 13 wird durch einen am Gehäuseteil 20 angeordneten Begrenzungssteg 21 verhindert, wenn der Kolbenrand 18 am Begrenzungssteg 21 anliegt. Der Begrenzungssteg ist vorzugsweise ringförmig oder als radial spreizbarer Spreizring ausgebildet. In einem weiteren, hier nicht dargestellten Ausführungsbeispiel ist der Kolbenrand 18 auch in Bremsstellung von dem Begrenzungssteg 21 beabstandet. Hierdurch ist zuverlässig gewährleistet, daß der Bremsspannmechanismus in Bremsstellung vollständig gespannt ist, also eine maximale Blockierwirkung der Radbremse gegeben ist. Eine weitere Entspannung der Druckfeder 13 wird dann durch den Bremsspannmechanismus verhindert.

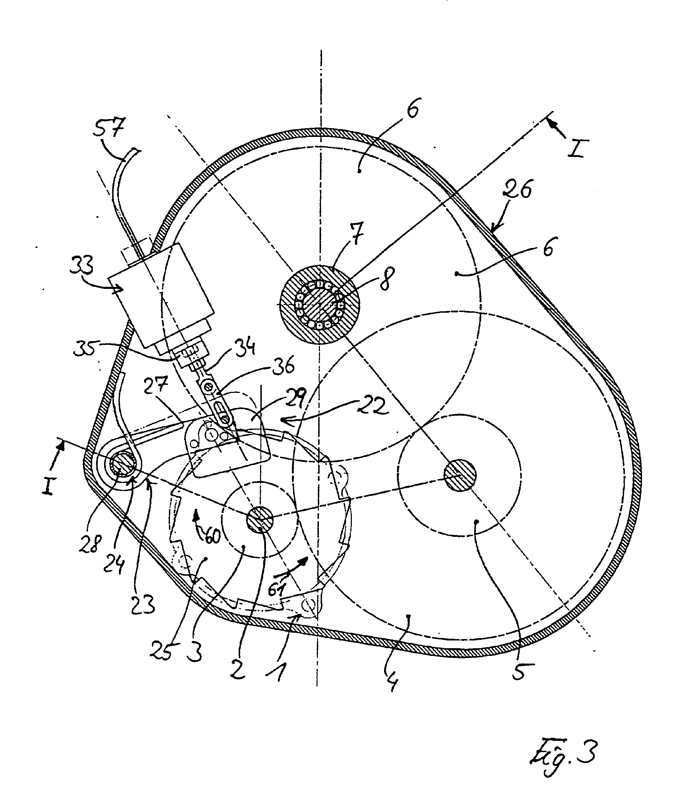

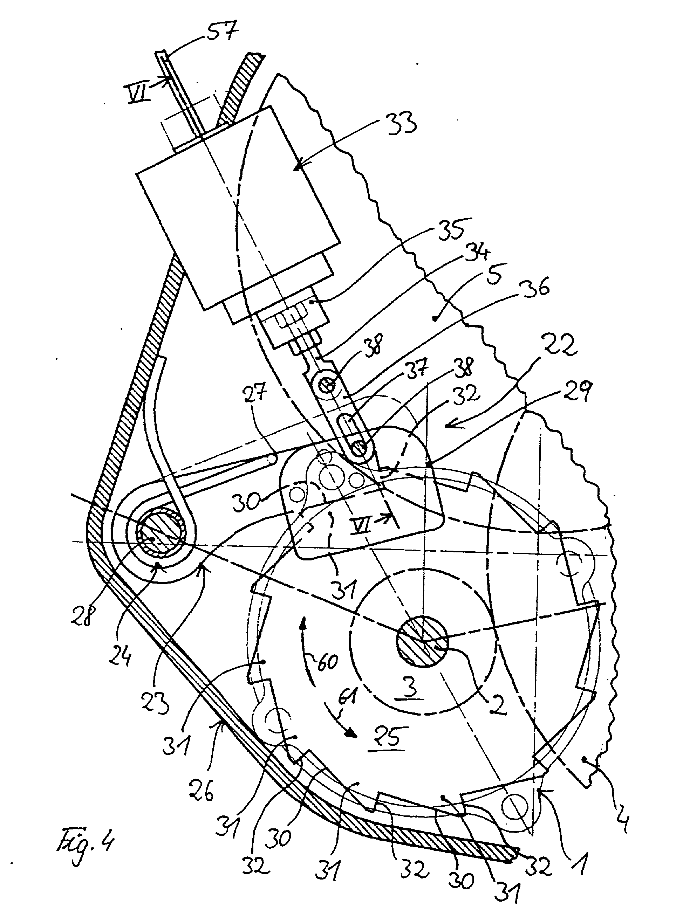

Die mechanische Bewegungssperre erfolgt durch eine Sperreinrichtung 22, welche ein Sperrelement in Form einer schwenkbeweglichen Sperrklinke 23 enthält, wie Fig.3 und Fig.4 entnehmbar ist. Dort befindet sich die Sperrklinke 23 aufgrund der Federkraft bzw. Rückstellkraft einer Drehfeder 24 in ihrer Sperrstellung, d.h. in Eingriff mit einem radial außen verzahnten Sperrad 25. Dabei stützt sich der eine Schenkel der Drehfeder 24 an einem Gehäuseteil 26 der Vorrichtung ab, während der andere Schenkel mit seinem abgebogenen Freiende in einer Klinkennut 27 der Sperrklinke 23 einliegt. Die Sperrklinke 23 und die Drehfeder 24 sind an einem Achsbolzen 28 gelagert, welcher ortsfest am Gehäuseteil 26 fixiert ist.

Die Sperrklinke 23 ist quer zu ihrer Schwenkebene beidseitig von jeweils einem plattenförmigen Führungsausleger 29 abgedeckt. Die beiden identisch ausgebildeten Führungsausleger 29 sind mit der Sperrklinke 23 fest verbunden und voneinander derart beabstandet, daß sie in Sperrstellung der Sperrklinke 23 das Sperrad 25 mit Bewegungsspiel tangieren. Wie Fig.4 gut entnehmbar ist, liegt die Sperrklinke 23 in Sperrstellung bündig an der Rückflanke 30 eines Sperrzahnes 31 des Sperrades 25 und bündig an der Vorderflanke 32 des benachbarten Sperrzahnes 31 an.

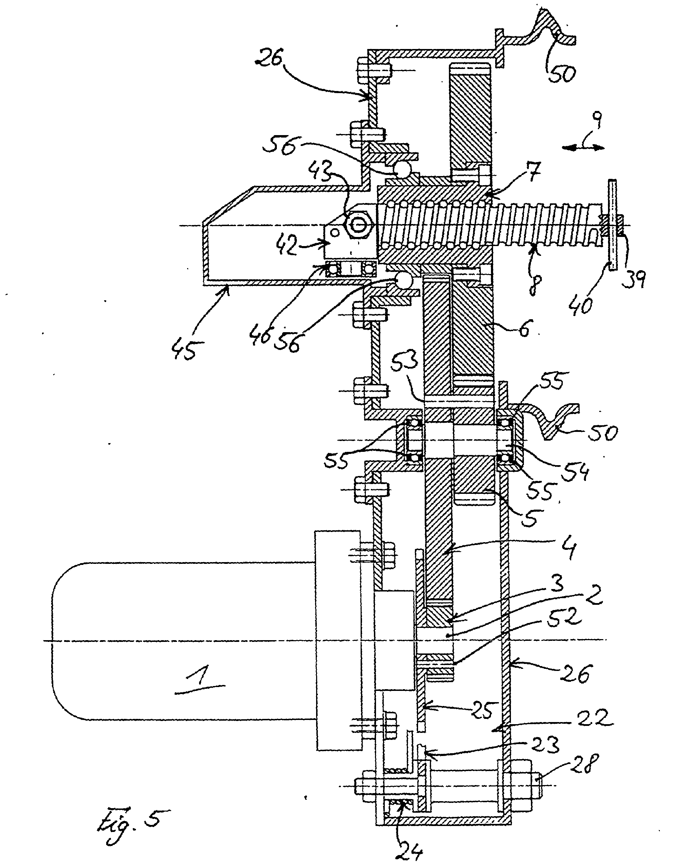

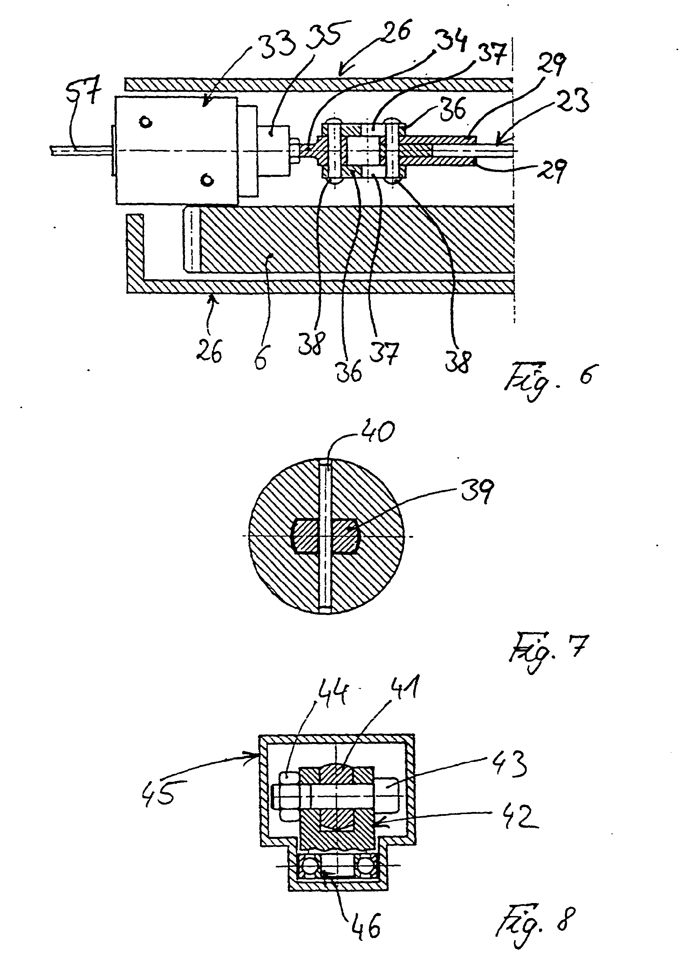

Die Sperrklinke 23 ist mit einem Elektromagneten in Form eines Hubmagneten 33 mechanisch gekoppelt und hierbei mit einem Gelenkarm 34 beweglich verbunden (Fig.6). Der Gelenkarm 34 wiederum ist mit einem Magnetanker 35 fest verbunden. Der Gelenkarm 34 trägt zwei gegenüberliegend angeordnete Verbindungsplatten 36, welche jeweils von einem Langloch 37 durchsetzt sind. Die Langlöcher 37 dienen der Bewegungsführung eines die Führungsausleger 29 mit der Sperrklinke 23 verbindenden Fixiernietes 38. Außerdem ermöglichen die Langlöcher 37 eine behinderungsfreie Beweglichkeit zwischen Sperrklinke 23 und Hubmagnet 33 beim Betrieb. Ein weiterer Fixierniet 38 fixiert die Verbindungsplatten 36 am Gelenkarm 34. Dabei können die Verbindungsplatten 36 mit dem Gelenkarm 34 entweder fest verbunden oder zur verbesserten Relativbeweglichkeit zwischen Magnetanker 35 und Sperrklinke 23 schwenkbeweglich verbunden sein.

Das dem Stangenkopf 15 zugewandte Axialende der Spindel 8 trägt einen Spindelstummel 39, der etwa bündig in eine korrespondierende Formausnehmung des Stangenkopfes 15 eingreift (Fig.7). Der Spindelstummel 39 und der Stangenkopf 15 sind von einem quer zur Bewegungsrichtung 9 verlaufenden Sicherungsstift 40 durchsetzt. Hierdurch ergibt sich eine besonders sichere mechanische Kopplung zwischen Kopplungsglied 10 und Spindel 8. Eine versehentliche Entkopplung wird wirksam verhindert. Außerdem kann durch diese Kopplung ohne weitere Maßnahmen das Auftreten eines Drehmomentes an der Spindel 8 verhindert (Momentensperre) werden, da der Bremsspannmechanismus üblicherweise bereits Rotationsbewegungen des Kopplungsgliedes 10 um seine Mittellängsachse 59 unterdrückt.

In einer weiteren Ausführungsform ist das dem Stangenkopf 15 zugewandte Axialende oder der Spindelstummel 39 der Spindel 8 abgerundet, wobei die Konvexseite der Abrundung an dem Stangenkopf 15 anliegt. Diese Abrundung ermöglicht vorteilhaft eine bewegliche Kopplung zwischen Spindel 8 und Kopplungsglied 10 derart, daß vom Bremsspannmechanismus erzwungene Schwenkbewegungen des Kopplungsgliedes 10 nicht auf die Spindel 8 übertragen werden. Der Spindelantrieb 7,8 und das Getriebe 2,3,4,5,6 sind deshalb vor Verschleiß besonders gut geschützt. Eine mögliche Schwenkbewegung des Kopplungsgliedes 10 ist in Fig.2 mittels der um einen Schwenkwinkel w versetzten Mittellängsachse 59' angedeutet.

Das dem Spindelstummel 39 axial gegenüberliegende Ende der Spindel 8 trägt einen Lagerstummel 41, der in einem U-förmigen Spindellager 42 einliegt. Die U-Schenkel des Spindellagers 42 und der Lagerstummel 41 sind gemeinsam von einer Fixierschraube 43 durchsetzt, welche mit einer Fixiermutter 44 korrespondiert. Das Spindellager 42 liegt in einem Gehäuseschacht 45 ein, der vom ersten Gehäuseteil 26 getragen ist. Mittels eines am Spindellager 42 angeordneten Stützlagers 46, insbesondere in Form eines Kugellagers, ist die Spindel 8 im Gehäuseschacht 45 abgestützt und gleichzeitig gegenüber dem Gehäuseschacht 45 relativbeweglich. Diese Lagerung der Spindel 8 gewährleistet, daß die Spindel 8 drehfest nur in Bewegungsrichtung 9 angetrieben wird. Eine zusätzliche drehfeste Kopplung zwischen Spindel 8 und Kopplungsglied 10 ist dann nicht unbedingt notwendig. Vielmehr ist eine mechanisch kontaktierende Anlage der Spindel 8 an dem Stangenkopf 15 ausreichend.

Das erste Gehäuseteil 26 nimmt das Untersetzungsgetriebe, den Spindelantrieb und die Motorantriebswelle 2 auf. Außerdem ist an dem ersten Gehäuseteil 26 das Gehäuse des Elektromotors 1 ortsfest fixiert, nämlich verschraubt. Das erste Gehäuseteil 26 selbst besteht wiederum aus mehreren Bestandteilen, welche durch Schraubverbindungen miteinander fest verbunden sind.

Das zweite Gehäuseteil 20 ist das eine Teilgehäuse eines herkömmlichen Bremszylinders, dessen Zylinderdeckel und ggfs. dessen Membran entfernt worden ist. Dabei ist das zweite Gehäuseteil 20 topfartig ausgebildet mit einem quer zur Bewegungsrichtung 9 verlaufenden Topfboden 47, der zentral von einer Durchgangsöffnung 48 für das Kopplungsglied 10 durchsetzt ist. Ein dem Topfboden 47 in Bewegungsrichtung 9 gegenüberliegender Topfkragen 49 wirkt als Anlagemittel zur bündigen Anlage des ersten Gehäuseteiles 26. Zu diesem Zweck trägt das erste Gehäuseteil 26 einen ringförmig in sich geschlossenen Anlagering 50, der bündig an der Innenseite des Topfkragens 49 anliegt. Die beiden Gehäuseteile 20,26 sind mittels eines Spannmittels in Form eines Spannbandes oder einer Spannschelle 51 miteinander lösbar verbunden, wobei dieses Spannmittel ebenfalls von dem herkömmlichen Bremszylinder stammen kann. Dabei werden z.B. die beiden Enden des Spannmittels durch Verschraubung miteinander lösbar verbunden. Mittels zweier am Topfboden 47 befestigter Gewindebolzen 58 wird die Vorrichtung analog einem herkömmlichen Bremszylinder am Fahrzeug befestigt.

Wie Fig.5 deutlich entnehmbar ist, sind das Sperrad 25, die Motorantriebswelle 2 und das erste Zahnrad 3 drehfest miteinander verbunden. Dabei sind das Sperrad 25 und das erste Zahnrad 3 durch einen Drehsicherungsstift oder mehrere Drehsicherungsstifte verbunden, was durch eine Stiftachse 52 eines Drehsicherungsstiftes angedeutet ist. Die Stiftachse 53 eines Drehsicherungsstiftes deutet die drehsichere Vebindung zwischen zweitem Zahnrad 4 und drittem Zahnrad 5 an. Gleichzeitig sind die beiden Zahnräder 4,5 über eine Welle 54 an einem Rillenkugellager 55 drehbar gelagert. Die Spindelmutter 7 ist mittels eines Schrägkugellagers 56 und gleichzeitg mittels der Federkraft der Druckfeder 13 im ersten Gehäuseteil 26 stabil gelagert.

Ausgehend von der Bremsstellung gemäß Fig.1 arbeitet die Vorrichtung bei vorhandenem Strom wie folgt: Eine elektrische Schalteinrichtung wird betätigt, so daß der Hubmagnet 33 aktiviert wird. Dessen Magnetanker 35 zieht durch die erzeugte Magnetkraft die Sperrklinke 33 aus der in Fig.3 und Fig.4 dargestellten Sperrstellung heraus. Die Bewegungssperre für das Sperrad 25 wird dabei aufgrund der Rückstellkraft der Drehfeder 24 reversibel aufgehoben, d.h. die Bewegungssperre wird durch die Federkraft der Drehfeder 24 automatisch wiederhergestellt, sobald der Hubmagnet 33 deaktiviert ist. Außerdem wird bei vorgenannter Betätigung der Schalteinrichtung der Elektromotor 1 erregt, der sodann das Sperrad 25 in Drehrichtung 60 dreht und dadurch das Kopplungsglied 10 in Richtung der Lösestellung gemäß Fig.2 antreibt. Der Elektromotor 1 und der Hubmagnet 33 werden automatisch durch einen Überlastschalter od. dgl. abgeschaltet, wenn die Lösestellung erreicht worden ist.

Ausgehend von der Bremsstellung ist ein Antrieb des Kopplungsgliedes 10 mittels des Elektromotors 1 auch dann möglich, wenn der Hubmagnet 33 die Sperrklinke 23 - z.B. aufgrund eines elektrischen oder mechanischen Defekts im Hubmagneten 33 - nicht aus der Sperrstellung entfernen kann. Die Sperrwirkung der Sperreinrichtung 22 ist nämlich aufgrund der Ausgestaltung der Sperrzähne 31 nur in Gegendrehrichtung 61 gegeben. Sollte deshalb keine Betätigung der Sperreinrichtung 22 erfolgen, um die Sperrklinke 23 aus der Sperrstellung zu entfernen, so muß die Motorantriebswelle 2 gegen die Federkraft der Drehfeder 24 in Drehrichtung 60 angetrieben werden. Hierbei bieten die Langlöcher 37 den Vorteil, daß der Gelenkarm 34 in seiner deaktivierten Lage gemäß Fig.4 verbleiben kann, wenn die Sperrklinke 23 von dem sich in Drehrichtung 60 drehenden Sperrad 25 aus seiner Sperrstellung herausgeschwenkt wird. Mechanische Beschädigungen von Sperrklinke 23 und Hubmagnet 35 werden somit vermieden.

Zur Überführung des Kopplungsgliedes 10 aus seiner Lösestellung gemäß Fig.2 in seine Bremsstellung gemäß Fig.1 muß aufgrund der einseitigen Sperrwirkung der Sperreinrichtung 22 in Gegendrehrichtung 61 zunächst die Sperrklinke 23 aus der Sperrstellung entfernt werden. Hierzu wird bei vorhandenem Strom die elektrische Schalteinrichtung betätigt, worauf der Hubmagnet 33 aktiviert und die Bewegungssperre aufgehoben wird. Gleichzeitig wird der Elektromotor 1 erregt und die Motorantriebswelle 2 nun in Gegendrehrichtung 61 gedreht, so daß die durch die sich entspannende Druckfeder 13 ohnehin erzeugten Drehbewegungen des Umsetzungsgetriebes unterstützt werden. Bei Erreichen der Bremsstellung werden der Hubmagnet 33 und der Elektromotor 1 wiederum durch geeignete Mittel automatisch abgeschaltet. In einer weiteren Ausführungsform wird zur Aufhebung der Bewegungssperre nur der Hubmagnet 33 und somit die Sperrklinke 23 elektrisch betätigt, ohne daß eine Erregung des Elektromotors 1 erfolgt, wenn die Bremsstellung erzielt werden soll. Die Druckfeder 13 entspannt sich aufgrund der nichtselbsthemmenden Ausbildung des Umsetzungsgetriebes automatisch.

Bei jedem Abschalten des Hubmagneten 33 erfolgt durch die Rückstellkraft der Drehfeder 24 automatisch eine erneute Bewegungssperre für das Kopplungsglied 10.

Bei Stromausfall ist ausgehend von der Lösestellung des Kopplungsgliedes 10 ein Bremsvorgang durch mechanische Betätigung der Sperreinrichtung 22 wie folgt möglich: Am Magnetanker 35 ist ein Übertragungsmittel in Form eines Zugseiles 57 befestigt, welches zum Bereich des Fahrersitzes führt und dort mit einem Betätigungsorgan (z.B. Handgriff) zur manuellen Betätigung des Magnetankers 35 verbunden ist. Das Ziehen an dem Betätigungsorgan ersetzt das elektromagnetische Anziehen des Magnetankers 35 und führt in gleicher Weise zur Aufhebung der Bewegungssperre. Die Druckfeder 13 kann sich deshalb entspannen, das Kopplungsglied 10 wird automatisch in die Bremsstellung gemäß Fig.1 überführt. Nach dem Loslassen des Betätigungsorgans wird die Sperrklinke 23 aufgrund der Rückstellkraft der Drehfeder 24 automatisch erneut in ihre Sperrstellung überführt. Die Bremsstellung ist mechanisch verriegelt.

## Patentansprüche

1. Vorrichtung zur Betätigung einer Bremse von Fahrzeugen,
- mit einem Elektromotor (1) und einem damit bewegungsmäßig gekoppelten, linearbeweglichen und mit einem Bremsspannmeahanismus verbindbaren Kopplungsglied (10), welches aus einer Bremsstellung heraus vom erregten Elektromotor (1) in eine Lösestellung überführt wird,
- mit einer elektrisch betätigten Sperreinrichtung (22, 23, 24, 25, 33, 35) zur Bewegungssperre des Kopplungsgliedes (10) zumindest in Lösestellung und
- mit einem mit dem Kopplungsglied (10) bewegungsgemäß derart gekoppelten Federspeicher (14), dass er in Lösestellung des Kopplungsgliedes (10) eine Federenergie speichernde Speicheranlage einnimmt und bei aufgehobener Bewegungssperre durch die freiwerdende Federenergie das Kopplungsglied (10) in die Bremsstellung überführt,
wobei
- die Sperreinrichtung (22, 23, 24, 25, 33, 35) in ihrer die Bewegungssperre bewirkenden Sperrstellung mechanisch gehalten ist derart, dass sie ein bewegliches Sperrelement (23) aufweist, welches in Sperrstellung eine Bewegung des Kopplungsgliedes (10) sperrt und
- das Sperrelement (23) in Lösestellung des Kopplungsgliedes (10) zur Aufhebung der Bewegungssperre durch elektrische und wahlweise mechanische Betätigung aus der Sperrstellung herausbewegbar ist,
**dadurch gekennzeichnet,**
**dass** die Sperreinrichtung (22, 23, 24, 25, 33, 35) ein Gesperre aufweist mit einem mit einer Motorantriebswelle (2) drehfest verbundenen, verzahnten Sperrrad (25) und einer mit dem Sperrrad (25) in Eingriff bringbaren, als Sperrelement wirksamen sperrklinke (23) zur blockierende Beaufschlagung der Notorantriebswelle (2) in Sperrstellung.

2. Vorrichtung nach Anspruch 1,
**dadurch gekennzeichnet,**
**daß** die Sperreinrichtung (22,23,24,25,33,35) ein Rückstellmittel (24) zur Rückstellung in ihre Sperrstellung enthält.

3. Vorrichtung nach Anspruch 1,
**dadurch gekennzeichnet,**
**daß** das Sperrelement (23) an einer Schwenkachse (28) schwenkbeweglich gelagert ist.

4. Vorrichtung nach Anspruch 1,
**dadurch gekennzeichnet,**
**daß** die Sperrklinke (23) quer zu ihrer Bewegungsebene beidseitig von jeweils einem Führungsausleger (29) flankiert ist, wobei die Führungsausleger (29) mit der Sperrklinke (23) fest verbunden sind und voneinander beabstandet in Sperrstellung das Sperrad (25) zumindest bereichsweise zwischen sich aufnehmen.

5. Vorrichtung nach Anspruch 1,
**dadurch gekennzeichnet,**
**daß** die Sperreinrichtung (22,23,24,25) mit einem beweglichen Magnetanker (35) eines elektrisch gesteuerten Elektromagneten (33) mechanisch gekoppelt ist, wobei die elektrisch erzeugte Magnetkraft der Sperrstellung der Sperreinrichtung (22,23,24,25) entgegengesetzt wirksam ist.

6. Vorrichtung nach Anspruch 5,
**dadurch gekennzeichnet,**
**daß** der Magnetanker (35) einen mit dem Sperrelement (23) beweglich verbundenen Gelenkarm (34) trägt, wobei die Bewegungen des Magnetankers (35) parallel zur Bewegungsebene des Sperrelements (23) verlaufen.

7. Vorrichtung nach Anspruch 1,
**dadurch gekennzeichnet,**
**daß** die Sperreinrichtung (22,23,24,25,33,35) zu ihrer mechanischen Betätigung mit einem Übertragungsmittel (57) mechanisch gekoppelt ist.

8. Vorrichtung nach den Ansprüchen 5 und 7,
**dadurch gekennzeichnet,**
**daß** das Übertragungsmittel (57) mit dem Elektromagneten (33), insbesondere mit dem beweglichen Magnetanker (35), mechanisch gekoppelt ist.

9. Vorrichtung nach Anspruch 7,
**dadurch gekennzeichnet,**
**daß** ein der Sperreinrichtung (22,23,24,25,33,35) abgewandter Bereich des Übertragungsmittels (57) mit einem, insbesondere manuell betätigbaren, Betätigungsorgan mechanisch gekoppelt ist.

10. Vorrichtung nach Anspruch 1,
**dadurch gekennzeichnet,**
**daß** die Motorantriebswelle (2) mit dem Kopplungsglied (10) über ein Umsetzungsgetriebe (3,4,5,6,7,8)gekoppelt ist, welches Dreh- in Linearbewegungen und umgekehrt umsetzt.

11. Vorrichtung nach Anspruch 10,
**dadurch gekennzeichnet,**
**daß** das Umsetzungsgetriebe einen Spindelantrieb (7,8) und ein damit zusammenwirkendes Getriebe, insbesondere ein Zahnradgetriebe (3,4,5,6) aufweist, wobei der eine Teil (7) des Spindelantriebs mit einem Zahnrad (6) drehfest verbunden ist und der andere Teil (8) des Spindelantriebs mit dem Kopplungsglied (10) in drehfester Wirkverbindung steht.

12. Vorrichtung nach Anspruch 1,
**dadurch gekennzeichnet,**
**daß** ihr Gehäuse mehrere Gehäuseteile (20,26) aufweist, welche zumindest teilweise miteinander lösbar verbunden sind.

13. Vorrichtung nach Anspruch 12,
**dadurch gekennzeichnet,**
**daß** ein die Sperreinrichtung (22,23,24,25,33,35) aufnehmendes erstes Gehäuseteil (26) mit einem den Federspeicher (14) und das Kopplungsglied (10) aufnehmenden zweiten Gehäuseteil (20) lösbar verbunden ist, wobei die beiden Gehäuseteile (20,26) mit einander zugewandten Gehäuseöffnungen aneinander angelegt sind und zur Aneinanderlage miteinander korrespondierende Anlagemittel (49,50) aufweisen.

14. Vorrichtung nach Anspruch 13,
**dadurch gekennzeichnet,**
**daß** das erste Gehäuseteil (26) und/oder das zweite Gehäuseteil (20) einen ringförmig in sich geschlossenen Anlagering (50) als Anlagemittel aufweist.

15. Vorrichtung nach Anspruch 13,
**dadurch gekennzeichnet,**
- **daß** das zweite Gehäuseteil (20) topfartig ausgebildet ist mit einem quer zur Bewegungsrichtung (9) des Kopplungsgliedes (10) verlaufenden, von einer Durchgangsöffnung (48) für das Kopplungsglied (10) durchsetzten Topfboden (47) und mit einem dem Topfboden (47) abgewandten, als Anlagemittel wirksamen Topfkragen (49) und
- **daß** ein am ersten Gehäuseteil (26) angeordnetes Anlagemittel (50) mit dem Topfkragen (49) korrespondiert.

16. Vorrichtung nach Anspruch 15,
**dadurch gekennzeichnet,**
**daß** das zweite Gehäuseteil (20) ein Teilgehäuse eines pneumatischen Bremszylinders ist, der ein mehrteiliges Zylindergehäuse aufweist und dessen Teilgehäuse miteinander lösbar verbunden sind.

17. Feststellbremsanlage mit mindestens einer Vorrichtung nach Anspruch 1.

## Claims

1. Device for operating a brake of motor vehicles
- with an electric motor (1) and a coupling member (10) which can be displaceably coupled therewith, linearly displaced and connected to a brake biasing mechanism, which is switched by the energised electric motor (1) from a braking position into a releasing position,
- with an electrically operated locking mechanism (22, 23, 24, 25, 33, 35) for locking the coupling member (10) to prevent any movement at least in the releasing position and
- with a spring energy storage system (14) which can be displaceably coupled with the coupling member (10) so that it assumes a position in which it stores spring energy when the coupling member (10) is in the releasing position and, when the locking action preventing movement is released by the spring energy as it is released, the coupling member (10) is switched into the braking position, and
- the locking mechanism (22, 23, 24, 25, 33, 35) is mechanically held in its locking position causing a locking action to prevent movement in such a way that it has a displaceable locking element (23) which exerts a locking action to prevent the coupling member (10) from moving in the locking position and
- when the coupling member (10) is in the releasing position, the locking element (23) can be moved out of the locking position by electrical and optionally mechanical operation in order to release the locking action preventing movement,
**characterised in that**
the locking mechanism (22, 23, 24, 25, 33, 35) has a lock mechanism with a toothed lock gear (25) connected to a motor drive shaft (2) so as to rotate therewith and an active locking pawl (23) serving as a locking element which can be moved into engagement with the lock gear (25) in order to pressurise the motor drive shaft (2) in a blocking action in the locking position.

2. Device as claimed in claim 1,
**characterised in that**
the locking mechanism (22, 23, 24, 25, 33, 35) contains a return means (24) for returning it to its locking position.

3. Device as claimed in claim 1,
**characterised in that**
the locking element (23) is mounted so as to be pivotable on a pivot axis (28).

4. Device as claimed in claim 1,
**characterised in that**
the locking pawl (23) is flanked on either side respectively by a guide arm (29) transversely to its displacement plane, and the guide arms (29) are fixedly connected to the locking pawl (23) and spaced at a distance apart from one another in the locking position accommodating at least certain regions of the lock gear (25) between them.

5. Device as claimed in claim 1,
**characterised in that**
the locking mechanism (22, 23, 24, 25) is mechanically coupled with a displaceable keeper (35) of an electrically controlled electro-magnet (33) and the electrically generated magnetic force actively opposes the locking position of the locking mechanism (22, 23, 24, 25).

6. Device as claimed in claim 5,
**characterised in that**
the keeper (35) bears an articulated arm (34) displaceably connected to the locking element (23) and the movements of the keeper (35) run parallel with the displacement plane of the locking element (23).

7. Device as claimed in claim 1,
**characterised in that**
the locking mechanism (22, 23, 24, 25, 33, 35) is mechanically coupled with a transmission means (57) to enable it to be mechanically operated.

8. Device as claimed in claims 5 and 7,
**characterised in that**
the transmission means (57) is mechanically coupled with the electro-magnet (33), in particular to the displaceable keeper (35).

9. Device as claimed in claim 7,
c h a r a c t e r i s e d i n t h a t
a region of the transmission means (57) remote from the locking mechanism (22, 23, 24, 25, 33, 35) is mechanically coupled with an operating element, which can be operated manually in particular.

10. Device as claimed in claim 1,
**characterised in that**
the motor drive shaft (2) is coupled with the coupling member (10) via a shifting gear mechanism (3, 4, 5, 6, 7, 8) which converts rotating movements into linear movements and vice versa.

11. Device as claimed in claim 10,
**characterised in that**
the shifting gear mechanism has a spindle drive (7, 8) and a gear mechanism co-operating therewith, in particular a toothed gear mechanism (3, 4, 5, 6), and one part (7) of the spindle drive is connected to a gear (6) so as to rotate therewith and the other part (8) of the spindle drive is actively connected to the coupling member (10) so as to rotate therewith.

12. Device as claimed in claim 1,
**characterised in that**
its housing has several housing parts (20, 26), at least some of which are releasably connected to one another.

13. Device as claimed in claim 12,
c h a r a c t e r i s e d i n t h a t
a first housing part (26) accommodating the locking mechanism (22, 23, 24, 25, 33, 35) is releasably connected to a second housing part (20) accommodating the spring energy storage system (14) and the coupling member (10), and the two housing parts (20, 26) are placed one against the other with mutually facing housing openings and have mutually matching contact fittings (49, 50) to assemble them in a fitted position.

14. Device as claimed in claim 13,
**characterised in that**
the first housing part (26) and/or the second housing part (20) has an annular, intrinsically closed abutment ring (50) as a fitting means.

15. Device as claimed in claim 13,
**characterised in that**
- the second housing part (20) is of a pot-type design with a pot base (47) extending transversely to the displacement direction (9) of the coupling member (10) with an orifice (48) extending through it for the coupling member (10), and with a pot collar (49) remote from the pot base (47) acting as a contact fitting,
- and an abutment means (50) disposed on the first housing part (26) co-operates with the pot collar (49).

16. Device as claimed in claim 15,
**characterised in that**
the second housing part (20) is a part housing of a pneumatic brake cylinder, which has a multi-part cylinder housing, and its housing parts can be releasably connected to one another.

17. Parking brake system with at least one device as claimed in claim 1.

## Revendications

1. Dispositif d'actionnement d'un frein de véhicules,
- comportant un moteur électrique (1) et un élément de couplage (10) couplé conformément au mouvement, mobile linéairement et raccordable à un mécanisme tendeur de frein, ledit élément de couplage étant transféré depuis une position de freinage dans une position de déblocage par le moteur électrique (1) actionné,
- comportant un dispositif de blocage (22, 23, 24, 25, 33, 35) actionné électriquement et servant au blocage du mouvement de l'élément de couplage (10) au moins en position de déblocage et
- comportant un accumulateur à ressort (14) couplé conformément au mouvement avec l'élément de couplage (10) de telle manière qu'il reçoit un équipement de stockage emmagasinant de l'énergie élastique dans la position de déblocage de l'élément de couplage (10) et transfert l'élément de couplage (10) dans la position de freinage en cas d'annulation du blocage du mouvement grâce à l'énergie élastique se dégageant, sachant que :
- le dispositif de blocage (22, 23, 24, 25, 33, 35) est maintenu mécaniquement dans sa position de blocage provoquant le blocage du mouvement de telle manière qu'il présente un élément de blocage mobile (23), lequel bloque un mouvement de l'élément de couplage (10) en position de blocage et
- l'élément de blocage (23) est mobile depuis la position de blocage en position de déblocage de l'élément de couplage (10) en vue de l'annulation du blocage du mouvement via l'actionnement électrique et au choix mécanique,
**caractérisé en ce que** le dispositif de blocage (22, 23, 24, 25, 33, 35) présente un mécanisme d'encliquetage comportant une roue à rochet dentée (25) reliée de manière fixe en rotation avec un arbre de transmission (2) et un cliquet d'arrêt (23) pouvant être mis en prise avec la roue à rochet (25) et agissant comme élément de blocage, en vue de l'admission bloquante de l'arbre de transmission (2) en position de blocage.

2. Dispositif selon la revendication 1, **caractérisé en ce que** le dispositif de blocage (22, 23, 24, 25, 33, 35) comporte un moyen de rappel (24) servant à le remettre dans sa position de blocage.

3. Dispositif selon la revendication 1, **caractérisé en ce que** l'élément de blocage (23) est logé de manière pivotante sur un axe de pivotement (28).

4. Dispositif selon la revendication 1, **caractérisé en ce que** le cliquet d'arrêt (23) est flanqué en travers de son plan de mouvement des deux côtés respectivement d'un bras de guidage (29), lesdits bras de guidage (29) étant reliés de manière fixe avec le cliquet d'arrêt (23) et recevant entre eux, au moins par sections espacés l'un de l'autre en position de blocage, la roue à rochet (25).

5. Dispositif selon la revendication 1, **caractérisé en ce que** le dispositif de blocage (22, 23, 24, 25) est couplé mécaniquement avec une armature (35) d'un électroaimant (33) à commande électrique, la force magnétique générée électriquement agissant à l'opposé de la position de blocage du dispositif de blocage (22, 23, 24, 25).

6. Dispositif selon la revendication 5, **caractérisé en ce que** l'armature d'aimant (35) porte un bras articulé (34) relié de manière mobile avec l'élément de blocage (23), les mouvements de l'armature d'aimant (35) évoluant parallèlement au plan de mouvement de l'élément de blocage (23).

7. Dispositif selon la revendication 1, **caractérisé en ce que** le dispositif de blocage (22, 23, 24, 25, 33, 35) est couplé mécaniquement avec un moyen de transmission (57) en vue de son actionnement mécanique.

8. Dispositif selon l'une quelconque des revendications 5 et 7, **caractérisé en ce que** le moyen de transmission (57) est couplé mécaniquement avec l'électroaimant (33), en particulier avec l'armature d'aimant mobile (35).

9. Dispositif selon la revendication 7, **caractérisé en ce qu'**une zone du moyen de transmission (57) opposée au dispositif de blocage (22, 23, 24, 25, 33, 35) est couplée mécaniquement avec un organe d'actionnement, actionnable en particulier manuellement.

10. Dispositif selon la revendication 1, **caractérisé en ce que** l'arbre de transmission (2) est couplé avec l'élément de couplage (10) par l'intermédiaire d'un mécanisme de transposition (3, 4, 5, 6, 7, 8), lequel change les mouvements de rotation en mouvements linéaires et vice versa.

11. Dispositif selon la revendication 10, **caractérisé en ce que** le mécanisme de transposition présente un entraînement par vis sans fin (7, 8) et un mécanisme de transmission coopérant avec, en particulier un mécanisme de transmission par engrenages (3, 4, 5, 6), la première partie (7) de l'entraînement par vis sans fin étant reliée de manière fixe avec une roue dentée (6) et l'autre partie (8) de l'entraînement par vis sans fin étant en relation fixe en rotation avec l'élément de couplage (10).

12. Dispositif selon la revendication 1, **caractérisé en ce que** son carter présente plusieurs parties de carter (20, 26), lesquelles sont reliées ensemble au moins en partie de manière amovible.

13. Dispositif selon la revendication 12, **caractérisé en ce qu'**une première partie de carter (26) recevant le dispositif de blocage (22, 23, 24, 25, 33, 35) est reliée de manière amovible avec une seconde partie de carter (20) recevant l'accumulateur à ressort (14) et l'élément de couplage (10), les deux parties de carter (20, 26) étant mises l'une contre l'autre avec des orifices de carter tournés l'un vers l'autre et présentant des moyens de disposition (49, 50) correspondant l'un à l'autre en vue de la juxtaposition.

14. Dispositif selon la revendication 13, **caractérisé en ce que** la première partie de carter (26) et/ou la seconde partie de carter (20) présente une bague de disposition (50), fermée de par sa nature en forme de cercle, en tant que moyen de disposition.

15. Dispositif selon la revendication 13, **caractérisé :**
- **en ce que** la seconde partie de carter (20) est réalisée en forme de pot, avec un fond de pot (47) évoluant en travers du sens de mouvement (9) de l'élément de couplage (10), traversé par un orifice de passage (48) pour l'élément de couplage (10) et avec un col de pot (49) agissant comme moyen de disposition, opposé au fond de pot (47) et
- **en ce qu'**un moyen de disposition (50) agencé au niveau de la première partie de carter (26) correspond au col de pot (49).

16. Dispositif selon la revendication 15, **caractérisé en ce que** la seconde partie de carter (20) est un carter partiel d'un cylindre de frein pneumatique, qui présente un carter de cylindre en plusieurs parties et dont les carters partiels sont reliés ensemble de manière amovible.

17. Equipement de freinage de stationnement comportant au moins un dispositif selon la revendication 1.
